# EUROPEAN PATENT SPECIFICATION

(11) **EP 2 996 275 B1**
(45) Date of publication and mention of the grant of the patent: **04.04.2018**
(21) Application number: 14806789.5
(22) Date of filing: 03.06.2014
(51) Int. Cl.: H04L 1/16, H04W 24/04, H04L 1/18

(54) **LINK PROCESSING METHOD AND MOBILE TERMINAL IN MULTIPLEXING CONTROL PROTOCOL**
VERKNÜPFUNGSVERARBEITUNGSVERFAHREN UND MOBILES ENDGERÄT IN EINEM MULTIPLEX-STEUERUNGSPROTOKOLL
PROCÉDÉ DE TRAITEMENT DE LIAISON ET TERMINAL MOBILE DANS UN PROTOCOLE DE COMMANDE DE MULTIPLEXAGE

(30) Priority: 04.06.2013 CN 201310218879
(43) Date of publication of application: 16.03.2016
(73) Proprietor: Huawei Device (Dongguan) Co., Ltd., Dongguan, Guangdong, PRC, 523808 (CN)
(72) Inventor: LI, Pan, Shenzhen Guangdong 518129 (CN)
(74) Representative: Thun, Clemens
(86) International application number: PCT/CN2014/079087
(87) International publication number: WO 2014/194806

(56) References cited:
- EP-A1- 1 278 348
- CN-A- 101 515 840
- CN-A- 101 719 918
- CN-A- 103 326 831
- NATARAJAN P ET AL: "Concurrent Multipath Transfer during path failure", COMPUTER COMMUNICATIONS, ELSEVIER SCIENCE PUBLISHERS BV, AMSTERDAM, NL, vol. 32, no. 15, 15 September 2009 (2009-09-15), pages 1577-1587, XP026437527, ISSN: 0140-3664 [retrieved on 2009-05-13]
- CHANGQIAO XU ET AL: "Performance Evaluation of Distributing Real-Time Video Over Concurrent Multipath", WIRELESS COMMUNICATIONS AND NETWORKING CONFERENCE, 2009. WCNC 2009. IEEE, IEEE, PISCATAWAY, NJ, USA, 5 April 2009 (2009-04-05), pages 1-6, XP031454389, ISBN: 978-1-4244-2947-9

## Description

### TECHNICAL FIELD

The present invention relates to communications technologies, and in particular, to a link processing method in the Multipath Transmission Control Protocol and a mobile terminal.

### BACKGROUND

Parallel multipath transmission implements parallel data transmission by using multiple network interfaces of a host and can satisfy requirements of people for high-bandwidth services (for example, online high-definition videos, multi-party games, multi-party conferences, and the like). The Multipath Transmission Control Protocol (Multipath Transmission Control Protocol, MPTCP for short) is a protocol that implements parallel multipath transmission based on the Transmission Control Protocol (Transmission Control Protocol, TCP for short), and can implement seamless integration with a TCP network and implement reliability, security, and multi-homing performance of end-to-end transmission.

For example, XP026437527 refers to a concurrent multipath transfer during path failure. Further, XP031454389 refers to a performance evaluation of distributing real-time video over concurrent multipath.

A mobile terminal (such as a mobile phone or a tablet computer) can implement a function of parallel multipath transmission by using the MPTCP protocol. However, because the mobile terminal uses a wireless network characterized by unstable links, implementation of parallel multipath transmission by the mobile terminal by using the MPTCP may have the following problem: unstable links may increase a probability of a link failure. However, in an MPTCP technology, once retransmission timeout occurs on a link, data is retransmitted simultaneously on another link and the original link, to ensure integrity of the link. The mobile terminal deletes, only when an acknowledgement of the data is received on all links sending the data, data stored in a send buffer. However, generally, the mobile terminal requires six times of retransmission timeout to detect a link failure; therefore, during the process of N retransmissions, the data is always restored in the send buffer and subsequent data is blocked from entering the limited send buffer. In this case, another link with good performance cannot obtain available data for normal sending either, which affects overall performance of parallel multipath transmission and causes that resources of an entire network cannot be fully used.

### SUMMARY

The invention is defined by the independent claims. Embodiments of the present invention provide a link processing method in the Multipath Transmission Control Protocol and a mobile terminal, which can effectively reduce impact of a link with poor performance or a link that fails unexpectedly on parallel multipath transmission, improve network throughput, and improve overall performance of parallel multipath transmission.

A first aspect of the present invention provides a link processing method in the Multipath Transmission Control Protocol, including:
detecting that a timer of a link i times out, where i is a natural number;
obtaining a quantity Nᵢ of times the timer of the link i times out, where Nᵢ is a natural number; and
if the quantity Nᵢ of times the timer of the link i times out is greater than 1 and less than or equal to 5, sending a probe information packet through the link i, wherein the probe information packet is a special communications data packet and is used to detect whether a link fails,
if the quantity Nᵢ of times the timer of the link i times out is equal to 1, selecting a link j by using a preferential slow start threshold, SSTHRESH algorithm, wherein j is a natural number; and
simultaneously retransmitting, through the link i and the link j, a communications data packet lost on the link i.

In a first possible implementation manner of the first aspect of the present invention, the method further includes:
if the quantity Nᵢ of times the timer of the link i times out is greater than 1 and less than or equal to 5, marking a state of the link i as an unavailability predictable state, where the unavailability predictable state is used to notify a mobile terminal of a risk in sending a communications data packet through the link i.

A second aspect of the present invention provides a mobile terminal, including:
a detecting module, configured to detect that a timer of a link i times out, where i is a natural number;
an obtaining module, configured to obtain the quantity Nᵢ of times the timer of the link i times out, where Nᵢ is a natural number; and
a sending module, configured to: if the quantity Nᵢ of times the timer of the link i times out, which is obtained by the obtaining module, is greater than 1 and less than or equal to 5, send a probe information packet through the link i, wherein the probe information packet is a special communications data packet and is used to detect whether a link fails,
further comprising a first processing module, wherein
the first processing module is configured to: if the quantity Nᵢ of times the timer of the link i times out, which is obtained by the obtaining module, is equal to 1, select a link j by using a preferential slow start threshold SSTHRESH algorithm, wherein j is a natural number; and
the sending module is further configured to simultaneously retransmit, through the link i and the link j, a communications data packet lost on the link i.

In a first possible implementation manner of the second aspect of the present invention, the mobile terminal further includes a second processing module, where
the second processing module is configured to: if the quantity Nᵢ of times the timer of the link i times out is greater than 1 and less than or equal to 5, mark a state of the link i as an unavailability predictable state, where the unavailability predictable state is used to notify the mobile terminal of a risk in sending a communications data packet through the link i.

Technical effects of the present invention are as follows: in a case in which a quantity of timeout retransmission times of a link is greater than 1 and less than or equal to 5, a mobile terminal sends a probe information packet instead of a communications data packet through the link, which effectively implements prediction of a link failure. The solutions provided by the embodiments can effectively reduce

impact of a link with poor performance or a link that fails unexpectedly on parallel multipath transmission.

### BRIEF DESCRIPTION OF DRAWINGS

FIG. 1 is a flowchart of a link processing method in the Multipath Transmission Control Protocol according to Embodiment 1 of the present invention;
FIG. 2 is a flowchart of a link processing method in the Multipath Transmission Control Protocol according to Embodiment 2 of the present invention;
FIG. 3 is a flowchart of a link processing method in the Multipath Transmission Control Protocol according to Embodiment 3 of the present invention;
FIG. 4 is a schematic structural diagram of a mobile terminal according to Embodiment 4 of the present invention;
FIG. 5 is another schematic structural diagram of a mobile terminal according to Embodiment 4 of the present invention;
FIG. 6 is still another schematic structural diagram of a mobile terminal according to Embodiment 4 of the present invention; and
FIG. 7 is schematic structural diagram of a mobile phone according to Embodiment 5 of the present invention.

### DESCRIPTION OF EMBODIMENTS

The terms used in the embodiments of the present invention are merely for the purpose of describing specific embodiments, and are not intended to limit the present invention. The terms "a", "said", and "the" of singular forms used in the embodiments and the appended claims of the present invention are also intended to include plural forms, unless otherwise specified in the context clearly. It should also be understood that, the term "and/or" used herein indicates and includes any or all possible combinations of one or more associated listed items. It should be further understood that the term "include" used in the specification specifies presence of features, entities, steps, operations, elements and/or components, with presence or attachment of other features, entities, steps, operations, components, elements, and their combinations not excluded.

### Embodiment 1

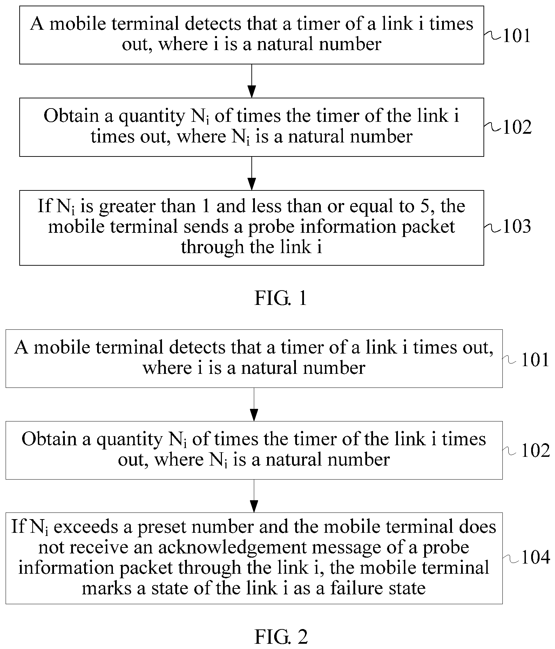

FIG. 1 is a flowchart of a link processing method in the Multipath Transmission Control Protocol according to Embodiment 1 of the present invention. As shown in FIG. 1, the method in this embodiment includes:

Step 101. A mobile terminal detects that a timer of a link i times out, where i is a natural number.

It should be noted herein that, a link may be understood as a wireless channel formed when a mobile terminal exchanges data with another mobile terminal, and there may be one, two, or more links between two mobile terminals, which is not limited herein.

It should be further noted that timeout retransmission is a significant mechanism for ensuring data reliability in the TCP protocol, and a principle of timeout retransmission is that: each time after a mobile terminal sends a communications data packet through a link, for example, a link i, a timer is started. If an acknowledgement message (Acknowledgement, ACK for short) of this sent communications data packet is not received within a preset time, the timer of the link i times out, and then this sent communications data packet needs to be retransmitted through the link i and the timer of the link i is reset; or if an acknowledgement message of this sent communications data packet is received within a preset time, the mobile terminal disables this timer.

Once the timer of the link i times out, the mobile terminal needs to update TCP maximum retransmissions (Max Retrans, TcpMDR for short), a congestion window Ci, and retransmission timeout (Retransmission time out, RTO for short) of the link i.

TcpMDR is a constant and the TCP protocol defines a quantity N of continuous times a timer times out. If the quantity N of continuous times the timer times out exceeds the constant TcpMDR, the mobile terminal determines that a link of the timer fails and disconnects the link. Different TCP maximum retransmissions may be set for different links.

Data cannot be transmitted by using only one window protocol, and the mobile terminal further needs to update the congestion window Ci to control data traffic sent through the link, so that the data cannot enter a network at a time to cause congestion, thereby effectively ensuring fairness between links. The congestion window Ci may increase exponentially and needs to be adjusted until timeout retransmission occurs.

RTO is a concept of time and a value of RTO increases exponentially with the quantity N of times the timer times out (for example, 2N).

For example, for the timer of the link, each time timeout occurs, a value of TcpMDR is reduced by 1, a value of the congestion window Ci is reduced to a half of its original value (if the value is 1, the value remains unchanged), and the value of RTO increases exponentially.

A change of RTO is described below by using an example: in a case in which RTO is one second and data retransmission occurs, a timer of which RTO is two seconds is used to retransmit data; if data retransmission recurs, a timer of which RTO is four seconds is used to retransmit the data; and if data retransmission occurs again, a timer of which RTO is 64 seconds is used to retransmit the data.

It should be further noted that, TcpMDR, Ci, and RTO may all be recorded in a cache, a flash memory, or an external memory of the mobile terminal, and these three values may be automatically restored and updated according to the TCP protocol.

Step 102. Obtain a quantity Nᵢ of times the timer of the link i times out, where Nᵢ is a natural number.

RTO of the timer is recorded in the cache, the flash memory, or the external memory of the mobile terminal, and therefore the mobile terminal can obtain RTO of the timer of the link i by accessing the cache, the flash memory, or the external memory, to obtain the quantity Nᵢ of times the timer of the link i times out according to a relationship between RTO and Nᵢ.

Step 103. If the quantity Nᵢ of times the timer of the link i times out is greater than 1 and less than or equal to 5, the mobile terminal sends a probe information packet through the link i.

In a case in which the probe information packet is sent through the link i, the timer of the link i needs to continue to work and does not need to be reset. Therefore, if the mobile terminal receives an acknowledgement message of the probe information packet through the link i before the quantity N of times the timer times out reaches a preset number, the mobile terminal marks a state of the link i as an active state and starts to send the communications data packet through the link i again. Herein, the communications data packet may be sent by using a slow start algorithm, where the slow start algorithm is a main algorithm for controlling link congestion in the current TCP and multipath TCP (Multipath TCP, MPTCP for short) protocols.

In this embodiment, a main function of the probe information packet is to detect whether the link i fails and a main function of the communications data packet lies in information communication between mobile terminals. The probe information packet may be understood as a special communications data packet and is used to detect whether a link fails.

Further, the mobile terminal may further mark the state of the link i as an unavailability predictable (Unavailability Predictable, UP for short) state, where the UP state is mainly used to notify the mobile terminal of a risk in sending the communications data packet through the link i. Generally, the mobile terminal may check a state of each link before sending the communications data packet, and the mobile terminal sends the communications data packet preferentially through a link in the active state instead of sending the communications data packet through a link in a failure state or in the UP state.

According to the link processing method in the Multipath Transmission Control Protocol provided by this embodiment of the present invention, in a case in which a quantity of timeout retransmission times of a link is greater than 1 and less than or equal to 5, a mobile terminal sends a probe information packet instead of a communications data packet through the link, which effectively implements prediction of a link failure. The solution provided by this embodiment can effectively reduce impact of a link with poor performance or a link that fails unexpectedly on parallel multipath transmission.

### Embodiment 2

FIG. 2 is a flowchart of a link processing method in the Multipath Transmission Control Protocol according to Embodiment 2 of the present invention. Based on Embodiment 1, the method provided by this embodiment of the present invention may further include:

Step 104. If the quantity Nᵢ of times the timer times out exceeds a preset number and the mobile terminal does not receive an acknowledgement message of the probe information packet through the link i, the mobile terminal marks a state of the link i as a failure state.

The failure state is mainly used to notify the mobile terminal that the communications data packet cannot be sent through the link i. If the mobile terminal detects that the state of the link i is the failure state before sending the communications data packet, the mobile terminal does not send the communications data packet through the link in the failure state.

Based on Embodiment 1, if the quantity of timeout retransmission times of the timer of the link exceeds the preset number, the mobile terminal may determine that the link fails and then disconnect the link. The solution provided by this embodiment can effectively reduce impact of a link with poor performance or a link that fails unexpectedly on parallel multipath transmission.

### Embodiment 3

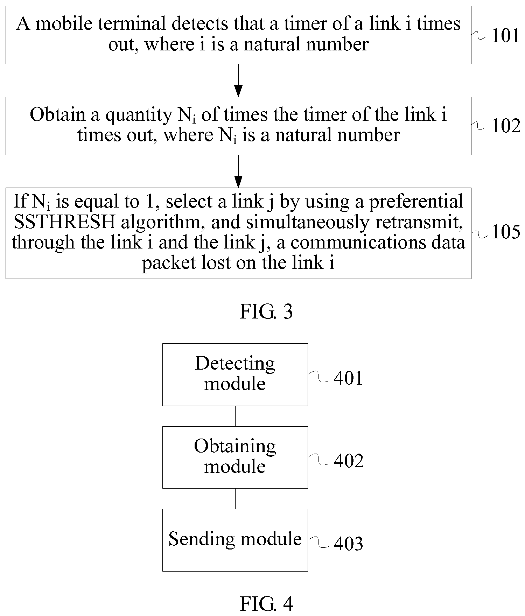

FIG. 3 is a flowchart of a link processing method in the Multipath Transmission Control Protocol according to Embodiment 3 of the present invention. Based on Embodiment 1 and/or Embodiment 2, the method provided by this embodiment of the present invention may further include:

Step 105. If the quantity Nᵢ of times the timer of the link i times out is equal to 1, the mobile terminal may select a link j by using a preferential slow start threshold (Slow Start Threshold, SSTHRESH for short) algorithm, where j is a natural number, and simultaneously retransmit, through the link i and the link j, a communications data packet lost on the link i.

If the mobile terminal receives an acknowledgement message of the lost communications data packet through the link j, it indicates that the lost communications data packet has been successfully transmitted through the link j and the mobile terminal may release a corresponding cache that stores the communications data packet.

The so-called slow start threshold herein means that when the congestion window Ci exceeds the slow start threshold, a congestion avoidance algorithm is used; when the congestion window Ci is lower than the slow start threshold, the slow start algorithm is used. Herein, the link selected by using the maximum SSTHRESH first algorithm is superior to other links in terms of packet loss ratio and throughput performance, can effectively ensure that data arrives at a receive end as efficiently as possible and reduce a quantity of retransmission timeout times.

### Embodiment 4

FIG. 4 is a schematic structural diagram of a mobile terminal according to Embodiment 4 of the present invention. The mobile terminal executes the foregoing method embodiments, and for specific procedures of the methods, refer to the content of Embodiment 1, which are not described herein again. As shown in FIG. 4, the mobile terminal includes: a detecting module 401, an obtaining module 402, and a sending module 403. The detecting module 401 is configured to detect that a timer of a link i times out, where i is a natural number; the obtaining module 402 is configured to obtain a quantity Nᵢ of times the timer of the link i times out, where Nᵢ is a natural number; and the sending module 403 is configured to: if the quantity Nᵢ of times the timer of the link i times out, which is obtained by the obtaining module 402, is greater than 1 and less than or equal to 5, send a probe information packet through the link i.

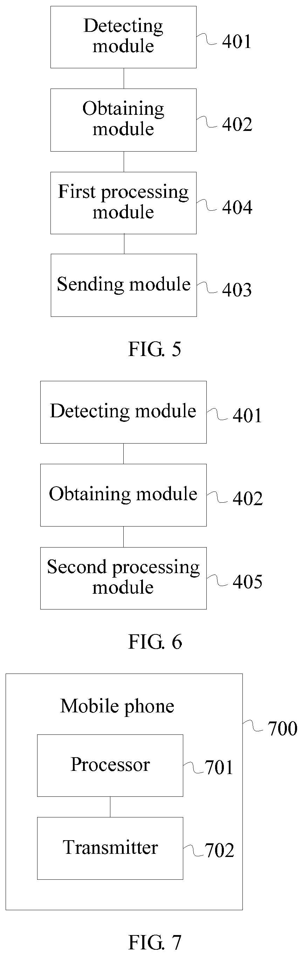

In an implementation manner, FIG. 5 shows another schematic structural diagram of a mobile terminal according to Embodiment 4 of the present invention, which further includes a first processing module 404, where the first processing module 404 is configured to: if the quantity Nᵢ of times the timer of the link i times out, which is obtained by the obtaining module 402, is equal to 1, select a link j by using a preferential slow start threshold SSTHRESH algorithm, where j is a natural number; and the sending module 403 is further configured to simultaneously retransmit, through the link i and the link j, a communications data packet lost on the link i.

In another implementation manner, FIG. 6 shows still another schematic structural diagram of a mobile terminal according to Embodiment 4 of the present invention, which further includes a second processing module 405, where the second processing module 405 is configured to mark a state of the link i as an unavailability predictable state, where the unavailability predictable state is used to notify the mobile terminal of a risk in sending the communications data packet through the link i.

According to the mobile terminal provided by this embodiment of the present invention, in a case in which a quantity of timeout retransmission times of a link is greater than 1 and less than or equal to 5, the mobile terminal sends a probe information packet instead of a communications data packet through the link, which effectively implements prediction of a link failure. If the quantity of timeout retransmission times of a timer of the link exceeds a preset number, the mobile terminal may determine that the link fails and then disconnect the link. The solution provided by this embodiment can effectively reduce impact of a link with poor performance or a link that fails unexpectedly on parallel multipath transmission.

### Embodiment 5

As shown in FIG. 7, a mobile phone is used as an example to describe the present invention in detail in this embodiment. It should be understood that the mobile phone 700 shown in the figure is merely an example of a mobile terminal and the mobile phone 700 may have more or fewer components than those shown in FIG. 7, may combine two or more components, or may have different component configurations. The various components shown in the figure may be implemented by hardware including one or more signal processing and/or application specific integrated circuits, software, or a combination of software and hardware.

The mobile phone 700 executes the foregoing method embodiments, and for specific procedures of the methods, refer to the content of Embodiment 1, which are not described herein again. As shown in FIG. 7, the mobile phone include: a processor 701 and a transmitter 702. The processor 701 is configured to: detect that a timer of a link i times out, and obtain a quantity Nᵢ of times the timer of the link i times out, where i is a natural number and Nᵢ is a positive integer. The transmitter 702 is configured to: if the quantity Nᵢ of times the timer of the link i times out, which is obtained by the processor 701, is greater than 1 and less than or equal to 5, send a probe information packet through the link i.

The processor 701 mentioned above may be a CPU of the mobile phone, a physical chip disposed inside or outside the mobile phone, or the like. The transmitter 702 may be a transceiver antenna of the mobile phone, a physical chip disposed inside or outside the mobile phone, or the like.

In an implementation manner, the foregoing processor 701 may be further configured to: if the obtained quantity Nᵢ of times the timer of the link i times out is equal to 1, select a link j by using a preferential slow start threshold SSTHRESH algorithm, where j is a natural number; and the transmitter 702 may be further configured to simultaneously retransmit, through the link i and the link j, a communications data packet lost on the link i.

In another implementation manner, the foregoing processor 701 may be further configured to: if the obtained quantity Nᵢ of times the timer of the link i times out is greater than 1 and less than or equal to 5, mark a state of the link i as an unavailability predictable state, where the unavailability predictable state is used to notify a mobile terminal (such as a mobile phone) of a risk in sending a communications data packet through the link i.

In a case in which a quantity of timeout retransmission times of a link is greater than 1 and less than or equal to 5, the mobile phone provided by this embodiment of the present invention sends a probe information packet instead of a communications data packet through the link, which effectively implements prediction of a link failure. If the quantity of timeout retransmission times of a timer of the link exceeds a preset number, the mobile phone may determine that the link fails and then disconnect the link. The solution provided by this embodiment can effectively reduce impact of a link with poor performance or a link that fails unexpectedly on parallel multipath transmission.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, rather than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, as long as these modifications or replacements do not cause the essence of corresponding technical solutions to depart from the scope of the technical solutions of the embodiments of the present invention.

## Claims

1. A link processing method in the Multipath Transmission Control Protocol, comprising:
detecting that a timer of a link i times out, wherein i is a natural number (Step 101);
obtaining a quantity Nᵢ of times the timer of the link i times out, wherein Nᵢ is a natural number (Step 102);
if the quantity Nᵢ of times the timer of the link i times out is greater than 1 and less than or equal to 5, sending a probe information packet through the link i, wherein the probe information packet is a special communications data packet and is used to detect whether a link fails (Step 103);
if the quantity Nᵢ of times the timer of the link i times out is equal to 1, selecting a link j by using a preferential slow start threshold, SSTHRESH algorithm, wherein j is a natural number; and
simultaneously retransmitting, through the link i and the link j, a communications data packet lost on the link i (Step 105).

2. The method according to claim 1, wherein the method further comprises:
if the quantity Nᵢ of times the timer of the link i times out is greater than 1 and less than or equal to 5, marking a state of the link i as an unavailability predictable state, wherein the unavailability predictable state is used to notify a mobile terminal of a risk in sending a communications data packet through the link i.

3. A mobile terminal, comprising:
a detecting module (401), configured to detect that a timer of a link i times out, wherein i is a natural number;
an obtaining module (402), configured to obtain a quantity Nᵢ of times the timer of the link i times out, wherein Nᵢ is a natural number; and
a sending module (403), configured to: if the quantity Nᵢ of times the timer of the link i times out, which is obtained by the obtaining module, is greater than 1 and less than or equal to 5, send a probe information packet through the link i, wherein the probe information packet is a special communications data packet and is used to detect whether a link fails,
further comprising a first processing module (404), wherein
the first processing module (404) is configured to: if the quantity Nᵢ of times the timer of the link i times out, which is obtained by the obtaining module, is equal to 1, select a link j by using a preferential slow start threshold SSTHRESH algorithm, wherein j is a natural number; and
the sending module (403) is further configured to simultaneously retransmit, through the link i and the link j, a communications data packet lost on the link i.

4. The mobile terminal according to claim 3, further comprising a second processing module, wherein
the second processing module (405) is configured to, if the quantity Nᵢ of times the timer of the link i times out is greater than 1 and less than or equal to 5,, mark a state of the link i as an unavailability predictable state, wherein the unavailability predictable state is used to notify the mobile terminal of a risk in sending a communications data packet through the link i.

## Patentansprüche

1. Verbindungsverarbeitungsverfahren in dem Mehrwegeübertragungssteuerungsprotokoll, umfassend:
Erkennen, dass ein Zeitgeber einer Verbindung i abschaltet, wobei i eine natürliche Zahl ist (Schritt 101);
Erhalten einer Menge Nᵢ von Malen, die der Zeitgeber der Verbindung i abschaltet, wobei Nᵢ eine natürliche Zahl ist (Schritt 102);
wenn die Menge Nᵢ von Malen, die der Zeitgeber der Verbindung i abschaltet, größer als 1 und kleiner gleich 5 ist, Senden eines Suchinformationspakets durch die Verbindung i, wobei das Suchinformationspaket ein besonderes Kommunikationsdatenpaket ist und zum Erkennen benutzt wird, ob eine Verbindung ausfällt (Schritt 103);
wenn die Menge Nᵢ von Malen, die der Zeitgeber der Verbindung i abschaltet, gleich 1 ist, Auswählen einer Verbindung j durch Verwenden eines bevorzugten Langsamstartschwellwert(SSTHRESH - Slow Start Threshold)-Algorithmus, wobei j eine natürliche Zahl ist; und
gleichzeitiges Wiederübertragen durch die Verbindung i und durch die Verbindung j eines auf der Verbindung i verlorengegangenen Kommunikationsdatenpakets (Schritt 105).

2. Verfahren nach Anspruch 1, wobei das Verfahren weiterhin umfasst:
wenn die Menge Nᵢ von Malen, die der Zeitgeber der Verbindung i abschaltet, größer als 1 oder kleiner gleich 5 ist, Markieren eines Zustandes der Verbindung i als ein vorhersagbarer Nichtverfügbarkeitszustand, wobei der vorhersagbare Nichtverfügbarkeitszustand benutzt wird, ein mobiles Endgerät über ein Risiko beim Senden eines Kommunikationsdatenpakets durch die Verbindung i zu benachrichtigen.

3. Mobiles Endgerät, umfassend:
ein Erkennungsmodul (401), eingerichtet zum Erkennen, dass ein Zeitgeber einer Verbindung i abschaltet, wobei i eine natürliche Zahl ist;
ein Erhaltungsmodul (402), eingerichtet zum Erhalten einer Menge Nᵢ von Malen, die der Zeitgeber der Verbindung i abschaltet, wobei Nᵢ eine natürliche Zahl ist; und
ein Sendemodul (403), eingerichtet zum: wenn die Menge Nᵢ von Malen, die der Zeitgeber der Verbindung i abschaltet, die durch das Erhaltungsmodul erhalten wird, größer als 1 und kleiner gleich 5 ist, Senden eines Suchinformationspakets durch die Verbindung i, wobei das Suchinformationspaket ein besonderes Kommunikationsdatenpaket ist und zum Erkennen benutzt wird, ob eine Verbindung ausfällt,
weiterhin umfassend ein erstes Verarbeitungsmodul (404), wobei
das erste Verarbeitungsmodul (404) eingerichtet ist zum: wenn die Menge Nᵢ von Malen, die der Zeitgeber der Verbindung i abschaltet, die durch das Erhaltungsmodul erhalten wird, gleich 1 ist, Auswählen einer Verbindung j durch Verwenden eines bevorzugten Langsamstartschwellwert(SSTHRESH - Slow Start Threshold)-Algorithmus, wobei j eine natürliche Zahl ist; und
das Sendemodul (403) weiterhin eingerichtet ist zum gleichzeitigen Wiederübertragen durch die Verbindung i und die Verbindung j eines auf der Verbindung i verlorengegangenen Kommunikationsdatenpakets.

4. Mobiles Endgerät nach Anspruch 3, weiterhin umfassend ein zweites Verarbeitungsmodul, wobei
das zweite Verarbeitungsmodul (405) eingerichtet ist zum, wenn die Menge Nᵢ von Malen, die der Zeitgeber der Verbindung i abschaltet, größer als 1 und kleiner gleich 5 ist, Markieren eines Zustandes der Verbindung i als ein vorhersagbarer Nichtverfügbarkeitszustand, wobei der vorhersagbare Nichtverfügbarkeitszustand benutzt wird, das mobile Endgerät über ein Risiko beim Senden eines Kommunikationsdatenpakets durch die Verbindung i zu benachrichtigen.

## Revendications

1. Procédé de traitement de liaisons dans le protocole de commande de transmission par trajets multiples, comportant les étapes consistant à :
détecter qu'un temporisateur d'une liaison i expire, i étant un entier naturel (étape 101) ; obtenir une quantité Nᵢ de fois où le temporisateur de la liaison i expire, Nᵢ étant un entier naturel (étape 102) ;
si la quantité Nᵢ de fois où le temporisateur de la liaison i expire est supérieure à 1 et inférieure ou égale à 5, émettre un paquet d'information de sonde via la liaison i, le paquet d'information de sonde étant un paquet spécial de données de communications et étant utilisé pour détecter si une liaison est défectueuse (étape 103) ;
si la quantité Nᵢ de fois où le temporisateur de la liaison i expire est égale à 1, sélectionner une liaison j en utilisant un algorithme préférentiel à seuil de démarrage progressif, SSTHRESH, j étant un entier naturel ; et
réémettre simultanément, via la liaison i et la liaison j, un paquet de données de communications perdu sur la liaison i (étape 105).

2. Procédé selon la revendication 1, le procédé comportant en outre l'étape consistant :
si la quantité Nᵢ de fois où le temporisateur de la liaison i expire est supérieure à 1 et inférieure ou égale à 5, marquer un état de la liaison i comme un état prévisible d'indisponibilité, l'état prévisible d'indisponibilité étant utilisé pour notifier à un terminal mobile un risque concernant l'envoi d'un paquet de données de communications via la liaison i.

3. Terminal mobile, comportant :
un module (401) de détection, configuré pour détecter qu'un temporisateur d'une liaison i expire, i étant un entier naturel ;
un module (402) d'obtention, configuré pour obtenir une quantité Nᵢ de fois où le temporisateur de la liaison i expire, Nᵢ étant un entier naturel ; et
un module (403) d'émission, configuré pour : si la quantité Nᵢ de fois où le temporisateur de la liaison i expire, qui est obtenue par le module d'obtention, est supérieure à 1 et inférieure ou égale à 5, émettre un paquet d'information de sonde via la liaison i, le paquet d'information de sonde étant un paquet spécial de données de communications et étant utilisé pour détecter si une liaison est défectueuse,
comportant en outre un premier module (404) de traitement,
le premier module (404) de traitement étant configuré pour : si la quantité Nᵢ de fois où le temporisateur de la liaison i expire, qui est obtenue par le module d'obtention, est égale à 1, sélectionner une liaison j en utilisant un algorithme préférentiel à seuil de démarrage progressif, SSTHRESH, j étant un entier naturel ; et
le module (403) d'émission étant en outre configuré pour réémettre simultanément, via la liaison i et la liaison j, un paquet de données de communications perdu sur la liaison i.

4. Terminal mobile selon la revendication 3, comportant en outre un deuxième module de traitement,
le deuxième module (405) de traitement étant configuré pour, si la quantité Nᵢ de fois où le temporisateur de la liaison i expire est supérieure à 1 et inférieure ou égale à 5, marquer un état de la liaison i comme un état prévisible d'indisponibilité, l'état prévisible d'indisponibilité étant utilisé pour notifier au terminal mobile un risque concernant l'envoi d'un paquet de données de communications via la liaison i.
